# EUROPÄISCHE PATENTANMELDUNG

(11) **EP 1 579 972 A2**
(43) Veröffentlichungstag der Anmeldung: **28.09.2005**
(21) Anmeldenummer: 05006121.7
(22) Anmeldetag: 21.03.2005
(51) Int. Cl.: B29C 31/06, B29C 39/12, B29C 39/30, B29C 44/58, B29C 67/20, B29C 44/04, B29B 17/00

(54) **Vorrichtung und Verfahren zur Herstellung eines Formteils und Formteilform**

(30) Priorität: 25.03.2004 AT 5242004
(71) Anmelder: Greiner Perfoam GmbH, 4550 Kremsmünster (AT)
(72) Erfinder: Rammer, Dietmar, Ing., 4209 Engerwitzdorf (AT)
(74) Vertreter: Secklehner, Günter

(57) **Zusammenfassung**

Die Erfindung bezieht sich auf eine Fertigungsvorrichtung (1) für Formteile (4) sowie ein Verfahren zur Herstellung von Formteilen (4) und einen Formteil (4) aus einem flockenförmigen Materialgemisch (2), insbesondere Flocken (3) aus Recyclingkunststoff bzw. -schaumstoff. Die Fertigungsvorrichtung (1) weist zumindest eine Mischvorrichtung (14) auf, der gegebenenfalls eine Nachmischvorrichtung (24) nachgeordnet ist. Der Mischvorrichtung (14) oder Nachmischvorrichtung (24) ist über eine Versorgungsleitung verbunden eine mit einem Strömungsmedium, insbesondere einem Luftstrom eines Drucklufterzeugers (33) und/oder aus einem Druckspeicher (34), beaufschlagbare Formenfüllvorrichtung (35) nachgeordnet, die mit zumindest einer Formteilform (36) kuppelbar ist, und mit einer volumetrischen Dosiervorrichtung (23) zur Befüllung der Formteilform (36) mit dem Materialgemisch (2) versehen ist.

## Beschreibung

Die Erfindung betrifft eine Fertigungsvorrichtung wie im Oberbegriff des Anspruches 1 und ein Verfahren wie im Oberbegriff des Anspruches 40 und einen Formteil wie im Oberbegriff des Anspruches 51 und eine Formteilform wie im Oberbegriff des Anspruches 54 beschrieben.

Aus der EP 0 657 266 A1 ist ein Formteil aus Kunststoffschaum sowie ein Verfahren und eine Vorrichtung zu dessen Herstellung bekannt, wonach in einer Zerkleinerungsvorrichtung Teile aus Kunststoffschaum zerkleinert werden, z.B. in Flockenform, und in einer Mischvorrichtung für die weitere Verarbeitung zu Kunststoffformteilen vorbereitet werden. Der Mischvorrichtung ist ein Zwischenlagerbehälter nachgeordnet aus dem über eine Fördervorrichtung, z.B. einem Fördergebläse oder einem Schneckenförderer, das zerkleinerte Material über eine bedarfsweise, mit einer Formteilform kuppelbare Zufuhrleitung in einen Formhohlraum eingebracht werden, in dem der Formteil durch Zufuhr eines Mediums gebildet wird.

Aus dem Dokument WO 02/04191 A1 ist eine Vorrichtung zur Herstellung eines Schaumstoffproduktes aus Schaumstoffflocken mit Vorratsbehältern und zumindest einem Messbehälter und einem Misch- und/oder zumindest einem Pufferbehälter und mit einer Formteilform bekannt. Der Messbehälter ist zur gesonderten Erfassung des Gesamtgewichtes oder des Gesamtvolumens einzelner unterschiedlicher Raumgewichtsfraktionen der Schaumstoffflocken ausgebildet um die Zufuhr zu der Formteilform entsprechend den Anforderungen an das zu erzielende Raumgewicht zu steuern.

Aufgabe der Erfindung ist es, eine Vorrichtung zur Herstellung von Formteilen aus Kunststoffschaum, Kork, Gummi zu schaffen, die einen kurzen Befüllungsvorgang einer Formteilform mit einem zerkleinerten und aufbereitetem Material ermöglicht, bei Gewährleistung eines dem jeweiligen Volumen des Formteils und einem vorgegebenen Raumgewicht abgestimmten Füllvolumen und einem raschen Anpassungsvorgang an entsprechend den zu fertigenden Formteil sich ändernden Anforderungen.

Diese Aufgabe der Erfindung wird durch die im Kennzeichenteil des Anspruchs 1 wiedergegebenen Merkmale gelöst. Der überraschende Vorteil dabei ist, dass das Materialgemisch mittels einer Dosiervorrichtung in einem exakt bemessenen Volumen entsprechend der für den jeweiligen Formteil vorgegebenen Masse der Füllarmatur zugeführt und mittels des über die Versorgungsleitung zugeführten Druckmedium, insbesondere eines Luftstromes, in die Formteilform, ohne Rückwirkung auf den Dosiervorgang und mit einem variierbaren Verdichtungsgrad gefördert wird.

Möglich ist dabei eine Ausbildung nach Anspruch 2, weil dadurch eine kompakte Baueinheit mit hoher Dosierleistung erreicht wird.

Von Vorteil ist auch eine Ausbildung nach Anspruch 3, die ein rasches Anpassen der Dosierleistung an die jeweils zur Anwendung kommende Formteilform ermöglicht.

Durch die im Anspruch 4 beschriebene, vorteilhafte Weiterbildung wird das für einen Formfüllvorgang erforderliche Gesamtvolumen an Materialgemisch in eine Anzahl von Teilvolumina unterteilt und damit die Dosiergenauigkeit erhöht.

Die im Anspruch 5 beschriebene vorteilhafte Ausbildung gewährleistet eine ungehinderte Zufuhr des Materialgemisches in die Förderkammern der Dosiervorrichtung, wodurch Volumsschwankungen ausgeschlossen werden.

Durch die im Anspruch 6 gekennzeichnete Ausbildung erfolgt eine radiale Zufuhr des Materialgemisches in die Förderkammer und kann damit die Zufuhr aus dem Mischer bzw. Nachmischer schwerkraftbedingt erfolgen.

Von Vorteil ist aber auch eine Ausbildung nach Anspruch 7, wodurch eine Querbelüftung und damit rückstandsfreie Entleerung der Förderkammern der Dosiervorrichtung erfolgt.

Gemäß der im Anspruch 8 gekennzeichneten vorteilhaften Ausbildung wird ein rascher Wechsel der Formteilformen und damit eine kurze Taktzeit und hohe Flexibilität der Fertigungseinrichtung erreicht.

Gemäß der im Anspruch 9 gekennzeichneten vorteilhaften Ausbildung ist die Förderleistung zur Erzielung einer variabel einstellbaren Vorverdichtung des Materialgemisches im Formenhohlraum regelbar.

Möglich ist dabei auch eine Ausbildung nach Anspruch 10, wodurch weitere Regelkriterien für die Volumszuteilung des Materialgemisches in den Formenhohlraum erreicht werden.

Die im Anspruch 11 gekennzeichnete, bevorzugte Weiterbildung gewährleistet eine besonders intensive Mischbewegung im Mischbehälter vor der Zufuhr des Materialgemisches in die Formteilform.

Möglich ist dabei eine Ausbildung nach Anspruch 12, weil dadurch eine hohe Mischeffizienz und Anpassung an die physikalischen Eigenschaften des Materialgemische gewährleistet wird.

Durch die im Anspruch 13 gekennzeichnete Ausbildung wird eine gegenläufige Bewegung des Materialgemisches im Mischbehälter und damit eine vollständige Benetzung der Flocken mit dem während des Mischvorganges in den Mischbehälter eingesprühten Bindemittel erreicht.

Durch die im Anspruch 14 gekennzeichnete Ausbildung wird ein vertikaler Materialfluss begünstigt und werden weitere Fördereinrichtungen eingespart.

Gemäß den in den Ansprüchen 15 bis 18 gekennzeichneten Ausbildungen wird der regelmäßig durchzuführende Reinigungsvorgang von sich in der Füllarmatur zwangsweise anlegenden Rückstand vereinfacht und damit dir für die Reinigung erforderliche Stillstandszeiten der Anlage reduziert.

Von Vorteil ist weiters eine Ausbildung wie im Anspruch 19 gekennzeichnet, weil dadurch der Befüllungszustand der Formteilform laufend überwacht und für die Qualitätsverfolgung eine Protokollierung der Messdaten ermöglicht wird.

Möglich ist dabei eine Ausbildung nach Anspruch 20, gemäß der eine verlässliche Erfassung des Befüllungszustandes der Formteilform erreicht wird und durch rechtzeitige Unterbrechung der Förderung eine Ansammlung eines Rückstandes weitestgehend vermieden wird.

Durch die im Anspruch 21 gekennzeichnete vorteilhafte Ausbildung wird eine Selbstüberwachung des Systems erreicht und können bei Eintritt von Störungen sofort Maßnahmen zur Verhinderung von Fehlproduktionen gesetzt werden.

Gemäß den in den Ansprüchen 22 und 23 gekennzeichneten Ausbildungen wird eine regelmäßige Abfuhr etwaiger Restmengen erreicht, womit die Reinigungsintervalle für die regelmäßige Durchführung der Beseitigung von Ablagerungen verlängert werden und damit die Produktivität einer derartigen Anlage erhöht wird.

Möglich ist dabei eine Ausbildung nach Anspruch 24, wodurch die Bildung von anhaftenden Rückständen verzögert bzw. weitestgehend vermieden wird.

Eine weitere vorteilhafte Ausgestaltung ist im Anspruch 25 gekennzeichnet, wodurch ein hoher Teileaustausch, d.h. kurze Taktzeiten, für einen wirtschaftlichen Betrieb einer derartigen Fertigungsanlage erreicht werden und die erforderliche Konditionierzeit durch ausreichende Verweilzeit der Formteile in den Formteilformen gewährleistet ist.

Die in den Ansprüchen 26 und 27 gekennzeichneten Lösungen gewährleisten eine Versorgung der Formteilformen mit Betriebsmitteln und Energie sowie einen verlässlichen Datenaustausch für die Überwachung der Fertigungsanlage.

Es ist aber auch eine Ausbildung nach Anspruch 28 vorteilhaft, wodurch, insbesondere für kleinere bis mittlere Formteilen, ein hoher Ausstoß an Fertigteilen erreicht wird.

Die in den Ansprüchen 29 bis 32 gekennzeichneten, vorteilhaften Weiterbildungen ermöglichen die Ausbildung sehr komplexer Formteile, die ohne aufwendige Nachbearbeitungen zu formen sind, wodurch die Fertigungsanlage vielfältig einsetzbar ist.

Von Vorteil sind aber auch Ausbildungen nach den Ansprüchen 33 bis 35, weil damit ein Umrüsten der Formteilform auf produktspezifische Anforderungen einfach vorzunehmen ist und eine hohe Variabilität und damit Kosteneinsparung erreicht wird.

Gemäß den in den Ansprüchen 36 und 37 gekennzeichneten vorteilhaften Weiterbildungen wird der Formenwechsel auf der Transportvorrichtung vereinfacht und werden damit Stillstandszeiten reduziert.

Schließlich sind auch Ausbildungen nach den Ansprüchen 38 und 39 vorteilhaft, da aufwändige Leitungsinstallationen entfallen und ein sicherer Betrieb der Fertigungsvorrichtung gewährleistet ist.

Aufgabe der Erfindung ist es aber auch ein Verfahren zur Herstellung eines Formteiles zu schaffen mit dem es einfach möglich ist die vielfältigen Anforderungen, die an Formteile hinsichtlich Festigkeit und Elastizität gestellt werden, zu realisieren.

Diese Aufgabe wird durch die im Anspruch 40 wiedergegebenen Maßnahmen erreicht. Der überraschende Vorteil ist, dass ohne weiterer Konditioniermaßnahmen Formteile mit unterschiedlichen Elastizitäts- und Festigkeitsbereichen in einem Fertigungsvorgang erzielt werden.

Vorteilhaft sind dabei auch Maßnahmen wie in den Ansprüchen 41 bis 48 beschrieben wodurch mehrere an die vielfältigen Anforderungen anpassbare Regelverfahren erreicht werden.

Weiter sind auch Maßnahmen nach Anspruch 49 vorteilhaft wodurch eine Rückstandsbildung des Materialgemisches in der Füllarmatur weitestgehend vermieden wird und aufwendige und kostenintensive Reinigungsintervalle verlängert werden.

Schließlich ist auch eine Maßnahme nach Anspruch 50 von Vorteil, weil dadurch eine aufwendige Nachbearbeitung des Formteils vielfach entfällt.

Aufgabe der Erfindung ist es aber auch einen Formteil mit bereichsweise unterschiedlichen physikalischen Eigenschaften zu schaffen.

Diese Aufgabe wird durch die im Anspruch 51 wiedergegebenen Merkmale erreicht. Der überraschende Vorteil dabei ist, dass eine kontinuierlicher Übergang zwischen Bereichen mit unterschiedlichen Eigenschaften erzielt wird.

Gemäß den in den Ansprüchen 52 und 53 wiedergegebenen vorteilhaften Ausbildungen ist die Gestaltung einer Vielzahl unterschiedlicher, dem jeweiligen Verwendungszweck angepasster Bauteile, ohne mehrere Fertigungsschritte aufzuwenden, möglich.

Aufgabe der Erfindung ist auch die Schaffung einer Formteilform mit der nach dem Formvorgang der Formteil in der Formteilform etwaigen Folgeoperationen unterzogen werden kann.

Diese Aufgabe wird durch die Formteilform, wie sie im Anspruche 54 gekennzeichnet ist, gelöst. Der Vorteil der gekennzeichneten Formteilform liegt darin, dass das Formen des Formteils und die Vornahme von Folgeoperationen wie Auftrennen oder Einbringen von Einsenkungen, Perforieren etc. in einer Vorrichtung, ohne erforderlicher Entnahme, Zwischenlagerung, Transport erfolgt, wodurch Vorrichtungs- und Fertigungskosten eingespart werden und ein Ausschuss durch Fehler bei der Weiterbehandlung vermieden wird.

Gemäß der im Anspruch 55 gekennzeichneten vorteilhaften Weiterbildung wird ein einfacher Wechselvorgang bei Bedarf von unterschiedlich bestückten Trenn- und/oder Einsenkvorrichtungen erreicht wodurch auch die Umrüstzeiten kurz sind.

Möglich ist auch eine Ausbildung nach Anspruch 56, wodurch weitere Vorrichtungen eingespart werden.

Schließlich ist auch eine Ausbildung nach Anspruch 57 vorteilhaft, wodurch zusätzlich bewegte und damit aufwendige Gegenstempel, Gegenmesser etc., durch die einfache Maßnahme mit dem elastisch verformbaren Anschlagelement, eingespart werden.

Zum besseren Verständnis wird die Erfindung nachfolgend anhand der in den Figuren gezeigten Ausführungsbeispiele näher erläutert.

Es zeigen:
- Fig. 1: die erfindungsgemäße Fertigungsvorrichtung in Ansicht;
- Fig. 2: eine Detaildarstellung einer Formenfüllvorrichtung der erfindungsgemäßen Fertigungsvorrichtung;
- Fig. 3: eine Detaildarstellung einer Dosiervorrichtung geschnitten gemäß den Linien III-III in Fig. 2;
- Fig. 4: eine erfindungsgemäße Formteilform, geschnitten;
- Fig. 5: eine andere Ausbildung der Formteilform mit einem erfindungsgemäßen Formteil;
- Fig. 6: ein Diagramm über einen möglichen Verfahrensablauf zur Bildung des Formteils nach Fig. 5.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

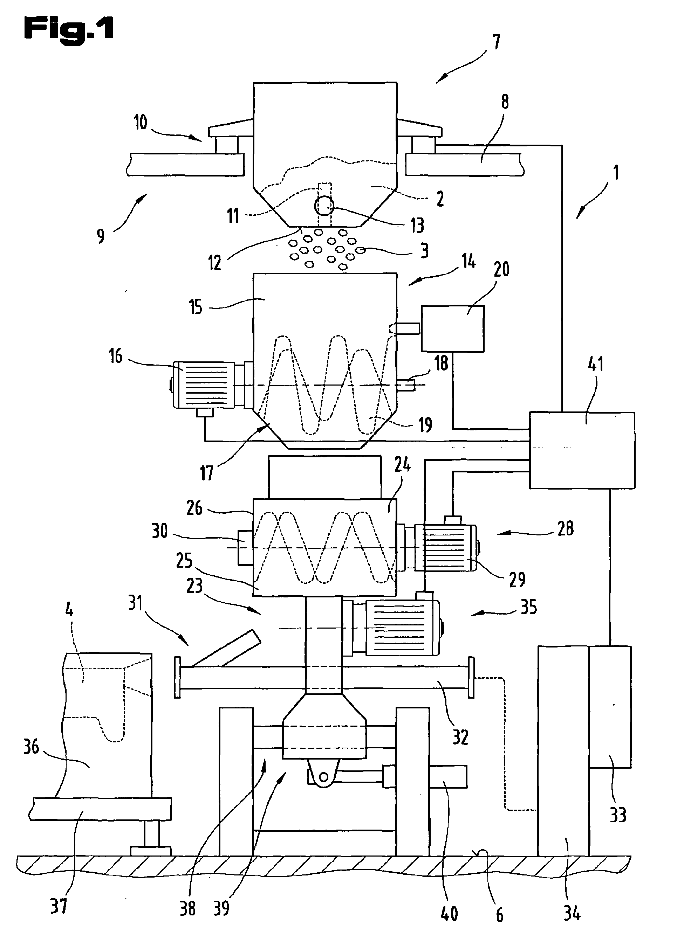

In der Fig. 1 ist eine Fertigungsvorrichtung 1 zur Verarbeitung eines Materialgemisches 2, aus vorbehandelten Kunststoffflocken 3, insbesondere aus Kunststoffschaum, aber auch andere Materialien z.B. Kork- oder Gummigranulat, die durch Zerkleinerung von Altteilen gewonnen werden, zu einem Formteil 4, gezeigt. Die Fertigungsvorrichtung 1 ist einerseits für einen schwerkraftbedingten Materialfluss teils vertikal orientiert und weist daher zumindest einen in einem entsprechenden Höhenabstand 5 von einer Aufstandsfläche 6 angeordneten Silobehälter 7 auf. Dieser Silobehälter 7 kann beispielsweise auf einer Dach- oder Deckenkonstruktion 8 eines Bauwerkes 9 befestigt sein. Weiters besteht die Möglichkeit den Silobehälter 7 auf einer Wiegevorrichtung 10 zur permanenten Gewichtserfassung des Inhalts wie auch des Gewichtes von Abgabemengen des Materialgemisches 2 aus dem Silobehälter 7 anzuordnen. Die Abgabe des Materialgemisches 2 aus dem Silobehälter erfolgt durch Betätigung einer Abgabeklappe 11, welche an einer der Aufstandsfläche 6 zugewandten Abgabeöffnung 12 des Silobehälters 7 angeordnet ist. Die Betätigung der Abgabeklappe 11 erfolgt beispielsweise über mit einem Druckmedium beaufschlagte Stellmittel 13, z.B. Pneumatikzylinder, welche bedarfsgerecht von einer Steuer- und Regeleinrichtung angesteuert werden.

Möglich ist auch die Anordnung mehrerer parallel gelagerter Silobehälter 7, die mittels einer Fördereinrichtung, z.B. einer Krananlage, bedarfsgerecht in eine Abgabeposition für eine in Richtung der Aufstandsfläche 6 nachgelagerte Mischvorrichtung 14 der Fertigungsvorrichtung 1 verstellbar sind. Selbstverständlich können die Silobehälter auch ortsfest angeordnet sein und die Ableitung des Materialgemisches über ein Rohrleitungssystem erfolgen. Damit ist es möglich in die Mischvorrichtung 14 unterschiedlich beschaffene Materialfraktionen einzubringen, die getrennt in den Silobehältern 7 eingelagert sind.

Die Mischvorrichtung 14 besteht aus einem trommelförmigen Mischbehälter 15 mit zumindest einem, mittels eines Antriebsmotors 16 antreibbaren Mischerrotor 17, bestehend aus einer drehgelagerten Rotorwelle 18, die mit einer oder mehreren schraubenförmig verlaufenden Wendeln 19 versehen ist.

Bevorzugt ist die Rotorwelle 18 mit gegenläufig von einem Außenumfang zum Zentrum des Mischbehälters 15 gewundenen Wendel 19 versehen. Ferner werden die Wendeln 19 bevorzugt aus mehreren Segmenten mit unterschiedlichem Außendurchmesser gebildet wodurch die Durchmischung der zugeführten unterschiedlichen Materialfraktionen besonders innig erfolgt und damit auch eine gleichmäßige Benetzung des Materialgemisches 2 an deren Oberfläche mit einem, während des fortlaufenden Mischvorganges in den Mischbehälter 15 über eine Zuführvorrichtung 20 und Düsen 21 eingebrachten Bindemittels 22, z.B. Präpolymer, warm aushärtbaren Kleber erreicht wird.

Die permanente Durchmischung des Materialgemisches 2 in der Mischvorrichtung 14 bewirkt einerseits die Verteilung des Bindemittels 22 und verhindert andererseits eine Klumpenbildung durch Anhaften der Flocken 3 aneinander sowie das Anhaften der mit dem Bindemittel 22 versehenen Flocken 3 an der Wandung des Mischbehälters 15 sowie am Mischerrotor 17.

Der Mischvorrichtung 14 in Richtung der Aufstandsfläche 6 nachgeordnet und unmittelbar einer Dosiervorrichtung 23 für das Materialgemisch 2 vorgeordnet, ist eine Nachmischvorrichtung 24 vorgesehen, die von der Mischvorrichtung 14 mit dem Materialgemisch 2 befüllt wird. Diese bewirkt einerseits einen fortlaufenden Mischvorgang des Materialgemisches 2 und andererseits einen Materialfluss zur störungsfreien Beschickung der Dosiervorrichtung 23 mit dem Materialgemisch 2. Ein eine Mischkammer 25 ausbildendes Gehäuse 26 ist unmittelbar auf der Dosiervorrichtung 23 aufgesetzt.

In der Mischkammer 25 ist in ähnlicher Ausführung, wie bereits vorhergehend beschrieben, eine Wendelwelle 27 drehbar gelagert und mittels eines Antriebsmotors 28, insbesondere einem drehzahlregelbaren Elektromotor 29, angetrieben, wobei eine Drehachse 30 der Wendelwelle 27 in einer zur Aufstandsfläche 6 parallel verlaufenden Ebene angeordnet ist.

Wie bereits erwähnt, ist der Nachmischvorrichtung 24 die Dosiervorrichtung 23 in Richtung des schwerkraftbedingten Materialstromes nachgeordnet. In der Dosiervorrichtung 23 erfolgt eine Umlenkung des Materialstromes in eine zur Aufstandsfläche 6 parallelen Richtung in eine an der Dosiervorrichtung 23 angeschlossenen rohrförmige Füllarmatur 31.

Weiters ist der Füllarmatur 31 gegenüber liegend und zu dieser fluchtend ausgerichtet eine Versorgungsleitung 32 an der Dosiervorrichtung 23 zur Zuführung eines Luftstromes aus einem Drucklufterzeuger 33 und/oder Druckspeicher 34 angeordnet. Die Dosiervorrichtung 23 und die Füllarmatur 31 bilden somit die maßgebenden Komponenten einer Formenfüllvorrichtung 35 zur Befüllung einer Formteilform 36 mit der entsprechend den Vorgaben für den Formteil 4 aufbereiteten und bereitgestellten Materialmenge das mittels des Luftstromes in die Formteilform 36 gefördert wird.

Im gezeigten Ausführungsbeispiel sind mehrere Formteilformen 36 auf einer Rundtisch-Förderanlage 37 angeordnet und werden mittels dieser zur Befüllung in einer Füllposition taktweise bereitgestellt. Damit wird bei Einsatz einer entsprechenden Anzahl von Formteilformen 36 trotz der erforderlichen Reaktions- und Konditionierzeit für den Formteil 4 und damit Verweilzeit in der Formteilform 36 ein hoher Ausstoß an Formteilen 4 erreicht.

Der Wechsel der Formteilformen 36 erfordert ein taktweises An- und Abkuppeln der Füllarmatur 31 wozu wie im Ausführungsbeispiel gezeigt die gesamte Formenfüllvorrichtung 35, also Füllarmatur 31, Dosiervorrichtung 23 und Versorgungsleitung 32 und auch die auf der Dosiervorrichtung 23 direkt aufgesetzte Nachmischvorrichtung 24 auf einem linear und in einer zur Aufstandsfläche 6 parallel verlaufenden Ebene in einer entsprechenden Führungsanordnung 38 verfahrbaren Transportschlitten 39 angeordnet ist. Mittels eines Antriebes 40, z.B. Pneumatikzylinder, elektrischer Spindeltrieb etc., wird der Transportschlitten 39 entsprechend dem in einer Regel- und/oder Steuereinrichtung 41 hinterlegtem Fertigungsprogramm betrieben.

Die Rundtisch- Förderanlage 37 ist mit entsprechenden Verankerungsmitteln für die Formteilformen 36 versehen und weist entsprechende über Drehverteiler mit einem feststehenden Netz verbundene Versorgungsleitungen für Dampf, Druckluft und Elektroenergie sowie für Steuer- und Datensignalaustausch auf.

Der Steuer- und Datensignalaustausch mit der Regel- und Steuervorrichtung 41 der Fertigungsvorrichtung 1 ist somit über Leitungsverbindungen möglich wie auch eine drahtlose Kommunikationseinrichtung durchaus zur Anwendung gelangen kann.

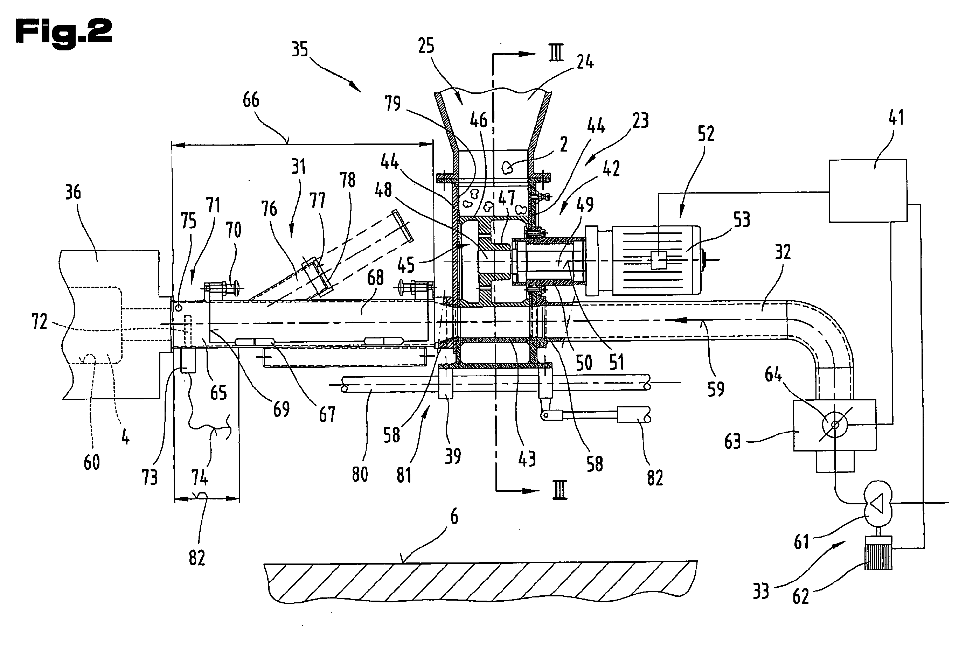

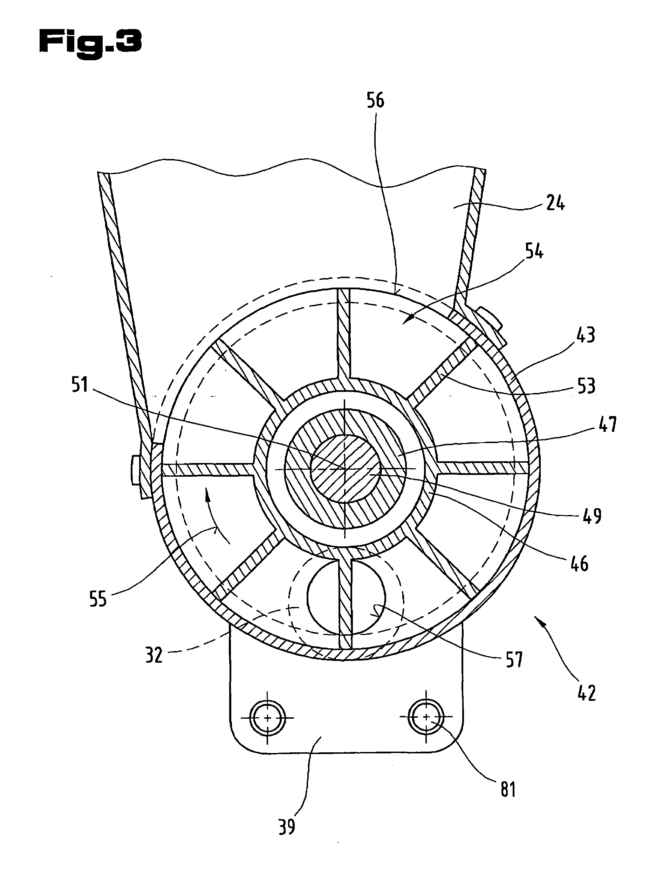

In den Fig. 2 und 3 ist nun im Detail die Formenfüllvorrichtung 35, bestehend aus der Dosiervorrichtung 23 und der in Förderrichtung des Materialgemisches 2 nachgeordneten Füllarmatur 31 und der der Dosiervorrichtung 23 vorgeordneten Versorgungsleitung 32 gezeigt.

Die Dosiervorrichtung 23 wird durch ein Gehäuse 42 aus einem zylinderförmigen Mantelteil 43 und diesem seitlich begrenzenden, parallel zueinander verlaufenden Wandscheiben 44 und einem darin rotierbar angeordneten Flügelzellenrad 45 gebildet. Das Flügelzellenrad 45 weist einen zylindrischen Laufring 46 mit einer Nabe 47 auf und ist auf einem Achsstummel 48 einer Antriebswelle 49 drehfest angeordneten, die in einer an zumindest einer der Wandscheiben 44 vorgesehenen Lageranordnung 50 gelagert ist. Eine Drehachse 51 verläuft senkrecht zu einer die Wandscheibe 42 aufnehmenden Ebene. Angetrieben wird das Flügelzellenlaufrad 45 von einem, mit der Antriebswelle 49 antriebsverbundenen Drehantrieb 52, z.B. einem drehzahlregelbaren Elektromotor 53, der mit der Regel- und/oder Steuereinrichtung 41 leitungsverbunden ist. Den Laufring 46, in Umfangsrichtung überragend, sind gleichmäßig über den Umfang verteilt radial abstehende Flügel 53 angeordnet. Diese bilden Förderkammern 54 zwischen dem Laufring 46 und dem Mantelteil 43 und zwischen den einander gegenüberliegenden Wandscheiben 44. Damit werden im Gehäuse 42 eine Anzahl von volumsgleichen Aufnahmen zur Befüllung mit dem Materialgemisch 2 ausgebildet das entsprechend einer vorgegebenen Drehrichtung gemäß - Pfeil 55 - in einer kreisförmigen Bahn ausgehend von einer Zulauföffnung 56 im Mantelteil 43 fortbewegt wird.

In einem, der Aufstandsfläche 6 zugewandten unteren Bereich des Gehäuses 42 sind koaxial zueinander in den gegenüberliegenden Wandscheiben 44 Durchtrittsöffnungen 57 angeordnet. Mittels die Durchtrittsöffnungen 57 umfassende Anschlussflansche 58 ist nun einerseits die Versorgungsleitung 32 für die Zufuhr des Luftstromes aus dem Drucklufterzeuger 33 und/oder dem Druckspeicher und andererseits die Füllarmatur 31 befestigt.

Der Füllarmatur 31 und weiters der Formteilform 36 wird nun das Materialgemisch 2 aus jeweils einer Anzahl von befüllten Förderkammern 54, die aus den Aufnahmevolumen einer Förderkammer 54 und dem entsprechenden Gesamt- Materialvolumen für den vorgegebenen Formteil 4 vorgegeben ist, durch Förderung mit dem Luftstrom gemäß - Pfeil 59 - aus dem Drucklufterzeuger 33 und/oder dem Druckspeicher 34 zugeführt und damit ein Formhohlraum 60 der Formteilform 36 aufgefüllt.

Der Drucklufterzeuger 33 ist in einer bevorzugten Ausführungsform ein Wälzkolbengebläse 61 mit einem über die Regel- und/oder Steuereinrichtung 41 in seiner Drehzahl regelbaren Antriebsmotor 62 ausgebildet. Weiters ist zur Regelung des Luftstromes in der-Versorgungsleitung 32 eine Regelklappe 63, die mittels eines Stellmittels 64 eine Mengenregelung des Luftstromes entsprechend in der Regel- und/oder Steuereinrichtung 41 vorgegebener Parameter bewirkt.

Die Füllarmatur 31 zur Beförderung des Materialgemisches 2 aus der Dosiervorrichtung 23 in den Formhohlraum 60 der Formteilform 36 ist durch ein, bevorzugt einen quadratischen Innenquerschnitt aufweisendes, Profilrohr 65 gebildet das über den Anschlussflansch 58 mit dem Gehäuse 42 bzw. der Wandscheibe 44 lösbar verbunden ist. Über einen großen Teil einer Länge 66 weist das Profilrohr 65 einen über Scharniere 67 angelenkten Deckel 68 auf mit dem ein Ausschnitt 69 öffenbar überdeckt ist. In Schließstellung wird der Deckel 68 über lösbare Verrastmittel 70 fixiert. Damit ist ein rasches Öffnen des Ausschnittes 69 des Profilrohres 65 möglich, um etwaige Anhaftungen und Rückstände des Materialgemisches 2 zu entfernen bzw. grundsätzlich eine Reinigung der gesamten Füllarmatur 31 durchführen zu können.

In einem der Formteilform 36 zugewandten Endbereich 71 ist ein mit einem Fühlerelement 72 in den Innenquerschnitt des Profilrohres 65 der Füllarmatur 31 einragender Füllstandssensor 73 angeordnet, der über eine Leitung 74 mit der Regel- und/oder Steuereinrichtung 41 verbunden ist. Weiters ist im Endbereich 71 eine Anschlussmuffe 75 mit einem Druckluftanschluss vorgesehen, über den in regelmäßigen Abständen ein Spülluftstrom zur Reinigung der Füllarmatur 31 eingebracht wird, um insbesondere im Anschlussbereich in der Füllarmatur 31 bzw. an der Formteilform 36 anhaftende Rückstände zu beseitigen und auszublasen.

Des weiteren ist an der Füllarmatur 31, insbesondere am Deckel 68 ein mit dem Innenraum leitungsverbundener Rohrstutzen 76 zur Absonderung etwaiger Rückstände vorgesehen. Eine Austrittsöffnung 77 des Rohrstutzens 76 ist mit einem luftdurchlässigen Filterelement 78 abgedeckt, wodurch ein Druckabbau nach einem Ausblasevorgang bzw. nach Erreichen der vollständigen Befüllung des Formhohlraumes 60 in der Füllarmatur 31 erfolgen kann.

Ein Befüllungsvorgang der Formteilform 36 bzw. des Formhohlraumes 60 erfolgt entsprechend vorgegebener Parameter über Regelung der Drehzahl des Flügelzellenrades 45 und des Luftstromes, geregelt nach Druck und Volumen, durch den drehzahlregelbaren Antrieb des Drucklufterzeugers 33 und Stellung der Regelklappe 63. Der Befüllungsvorgang wird mittels des Füllstandsensors 73, wobei sich insbesondere als Fühlerelement 72 Lichtleitfaserelemente eignen - aber auch weitere kapazitive oder induktive Sensoren durchaus möglich sind, überwacht, und der Befüllungsvorgang über Rückmeldung des Füllstandsensors 73, sobald ein Materialrückstau in die Füllarmatur 31 festgestellt wird, unterbrochen.

Durch die Regelungsvorgänge, sowohl der Dosiervorrichtung 23 wie auch des Luftstromes des Drucklufterzeugers 33 mit der Regelklappe 63, sind reproduzierbare Werte für das der Formteilform 36 entsprechend den Anforderungen an den Formteil 4 zuzuführende Volumen des Materialgemisches 2 gewährleistet. Damit werden qualitativ hochwertige Formteile 4 erreicht. Wesentlich ist weiters, dass durch den Luftstrom bei der Förderung des Materialgemisches 2 in den Formhohlraum 60 keinerlei Beeinflussung auf die Befüllung der Förderkammern 54 der Dosiervorrichtung 23 eintritt. Dies wird dadurch erreicht, dass der Laufring 46 und die Flügel 53 des Flügelzellenrades 45 gegenüber den Wandscheiben 44 dichtend anliegen, wozu es sich als vorteilhaft herausgestellt hat, die Wandscheiben 44 an inneren Oberflächen oder den Laufring 46 und die Flügel 53 an den Wandscheiben 44 und dem Mantelteil 43 zugewandten Stirnflächen mit einer reibungsarmen Schicht 79, insbesondere aus Kunststoff, Keramik etc. zu versehen.

Wie nun weiters dargestellt, ist die Dosiervorrichtung 23 mit der Füllarmatur 31 und der Versorgungsleitung 32 auf den verstellbaren Transportschlitten 39, z.B. auf parallel verlaufenden Führungsstangen 80, in einer Führungsanordnung 81 in zur Aufstandsfläche 6 parallelen Richtung verstellbar aufgelagert. Ein Antrieb des Führungsschlittens 39 erfolgt beispielsweise mittels eines Pneumatikzylinders 82, durch den ein entsprechender Verstellweg und damit Freistellung der Formenfüllvorrichtung 35 von der Formteilform 36 beim Wechsel einer bereits befüllten zu einer zu befüllenden Formteilform 36 erreicht wird.

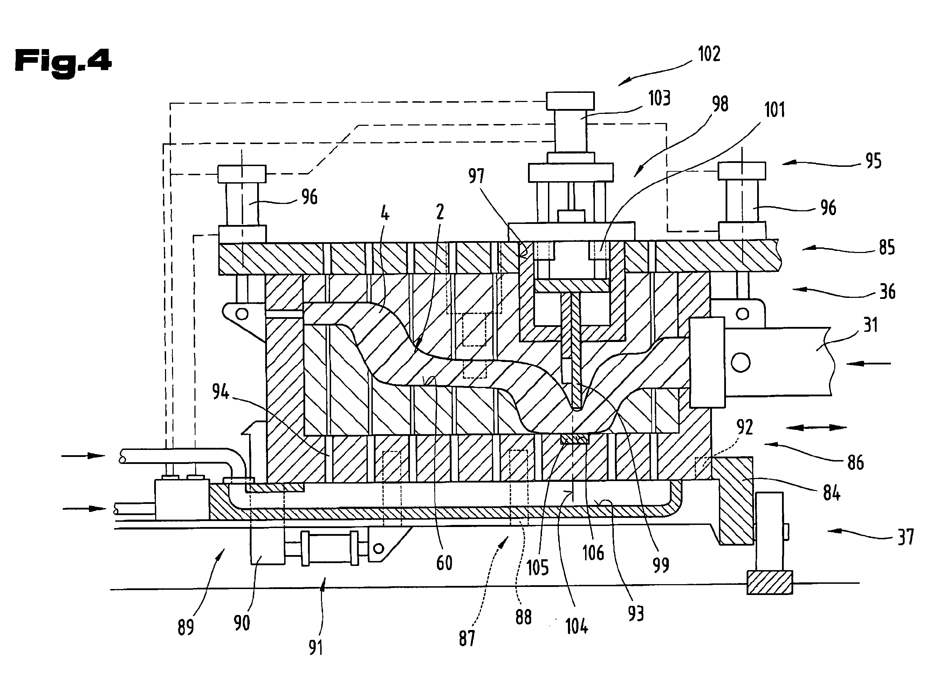

In der Fig. 4 ist ein Teilbereich eines Drehtisches 84 der Rundtisch-Förderanlage 37, mit der im Wesentlichen aus einem Formoberteil 85 und einem Formunterteil 86 bestehenden Formteilform 36 gezeigt. Diese ist über Positioniermittel 87, z.B. Positionierstifte 88, die zwischen dem Drehtisch 84 und dem Formunterteil 86 angeordnet sind, in Position auf dem Drehtisch 84 gehaltert. Über Kupplungsmittel 89, z.B. Schnellspannelemente in Form von Spannklauen 90 etc., betätigt über Pneumatikzylinder 91 und Gegenaufnahmen 92 wird ein positionsgenaues Schnelljustieren der Formteilform 36, insbesondere dessen Formunterteil 86, am Drehtisch 84 erreicht.

Durch diese Positionierung der Formteilform 36 auf dem Drehtisch 84 wird weiters eine Übereinstimmung vom im Drehtisch 84 angeordneten Verteilkanälen 93 für die Anspeisung der Formteilform 36 mit dem Reaktionsmedium, z.B. Dampf, Heißluft über in der Formteilform 36, insbesondere dem Formunterteil 86 vorgesehene und in den Formhohlraum 60 führende Versorgungsbohrungen 94 erreicht, über die das Reaktionsmedium in den Formhohlraum 60 und damit dem in diesem zur Bildung des Formteils 4 eingelagertem Materialgemisch 2 zugeleitet wird.

Diese Position am Drehtisch 84 gewährleistet auch die exakte Andockung der Füllarmatur 31 an die Formteilform 36 für die Befüllung des Formhohlraumes 60 mit dem Materialgemisch 2.

Bei der Befüllung des Formhohlraumes 60 ist vorerst der Formoberteil 85 nicht vollständig auf dem Formunterteil 86 aufgesetzt und wird damit ein Vorverdichtungsvorgang erreicht, wonach erst nach der Befüllung des Formhohlraumes 60 mit dem Materialgemisch 2 die Formteilform 36 vollständig geschlossen wird. Diese Vorverdichtung, die nach dem Befüllen des Formhohlraumes mit dem Materialgemisch 2 durch einen Schließvorgang, der Formteilform 36 mittels Verdichtungsantriebe 95, z.B. Pneumatikzylinder 96 erfolgt, bewirkt ein verdichtetes Materialgemisch 2 im Formhohlraum 60 in der Größenordnung von 10 % bis 50 % des Volumens des Formhohlraumes 60 und ist abhängig von den jeweils für den Formteil 4 vorgesehenen physikalischen Eigenschaften.

Wie nun weiters der Fig. 4 zu entnehmen, weist die Formteilform 36 als weitere Einrichtungen zur Behandlung des Formteiles 4, z.B. eine modulartig in einer Aufnahme 97 der Formteilform 36, insbesondere des Formoberteils 85 angeordnete Trenn- und/oder Einsenkvorrichtung 98 auf. Mittels dieser bedarfsgerecht anwendbaren Einrichtungen sind in Richtung des Formhohlraumes 60 und damit in den Formteil 4 Trennmesser 99 und/oder Einsenkstempel 100 etc. verstellbar wodurch vielfach eine Nachbearbeitung der Formteile 4 eingespart wird.

Derartige Trenn- und/oder Einsenkvorrichtungen 98 können wie bereits erwähnt modulartig gebildete Funktionseinheiten sein, bestehend aus einer Führungsanordnung 101 für die lineare Verstellbarkeit der Trennmesser 99 oder Einsenkstempel 100 und versehen mit einem Linearantrieb 102, z.B. einem Pneumatikzylinder 103 oder alternativ ein elektromotorischer Spindelantrieb, oder weitere aus dem Stand der Technik bekannte Antriebe.

Damit sind in dem Formteil 4 während des Konditionierungsvorganges sowohl Trennschnitte längs einer Trennebene 104, beispielsweise zur Bildung getrennter Formteile, wie aber auch Einsenkungen etc. ausführbar. Nach einer bevorzugten Ausführung wird zur Vornahme von Trennschnitten dem Trennmesser 104 gegenüberliegend in einen Wandteil der Formteilform 36 ein der Form des Trennmessers 104 angepasstes elastisch verformbares Anschlagelement 105 in einer nutförmigen Vertiefung 106 vorgesehen wodurch ein Gegenmesser nicht erforderlich ist und der Trennvorgang des Formteils 4 durch das Verformen des Anschlagelementes 105 erfolgt.

Einsenkungen werden oftmals derart ausgeführt, dass von diesen Ausgehend eine den Formteil 4 querende Perforationen entsteht, um bei Bedarf einen bestehen bleibenden Kern entsprechend der vorgesehenen Verwendung des Formteiles 4 einfach und ohne aufwendige Nachbearbeitung entfernen zu können. Dies wird oftmals für typenspezifische Adaptionen wie z.B. Kabeldurchführungen oder anzubringende mechanische Elemente vorgesehen, um verschiedenen Anwendungsfälle für den Bauteils 4 z.B. Aufbauteil, Verkleidungsteil etc. abdecken zu können und damit die sonst erforderliche Vielzahl von Formteilformen 36 einzuschränken.

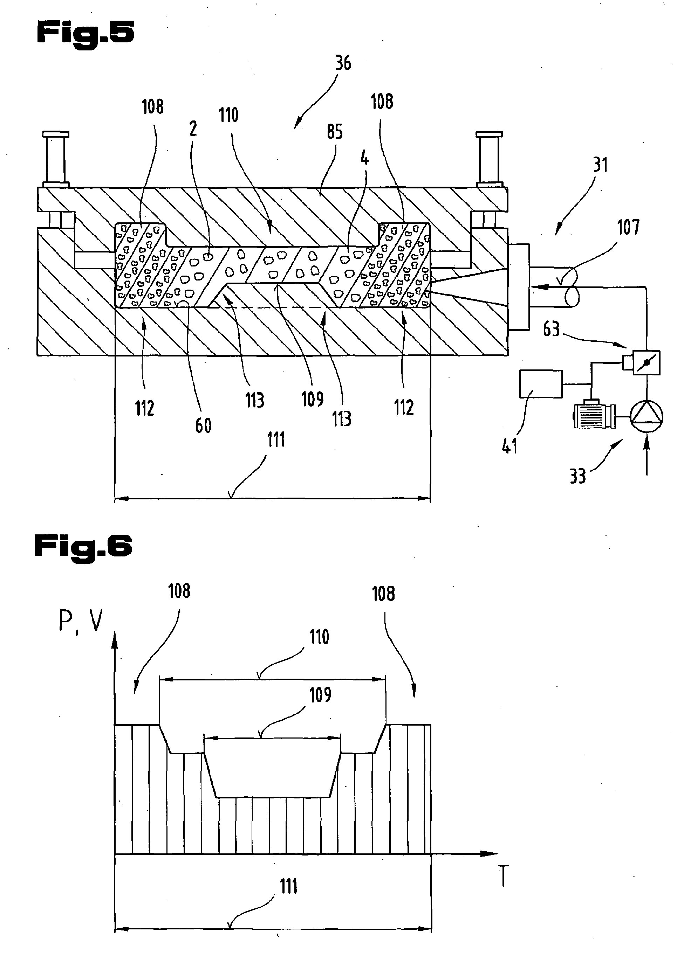

Anhand der in den Fig. 5 und 6 gezeigten Abbildungen wird das Verfahren zur Herstellung des Formteils 4 in einer möglichen Ausführungsvariante beschrieben. Die Fig. 5 zeigt dabei den Formteil 4 in der Formteilform 36 während der Konditionierzeit, also unmittelbar vor dem Entnehmen des fertig gestellten Formteils 4 aus der Formteilform 36.

Die Fig. 6 zeigt in einem Diagramm dazu den möglichen Verlauf eines Druckniveaus "P" oder des Fördervolumens "V" für den während des Füllvorganges zur Befüllung des Formhohlraumes 60 mit dem Materialgemisch 2 über die Füllarmatur 31 zugeführten Luftstromes, gemäß - Pfeil 107 - in Abhängigkeit der Füllzeit "T".

Bei dem Formteil 4 handelt es sich im gezeigten Ausführungsbeispiel um einen plattenförmigen mit Randstegen 108 und einer zentrisch angeordneten, z.B. kreisförmigen, Vertiefung 109 versehenen Formteil 4, z.B. einem Verkleidungselement etc.

Im Bereich der Randstege 108 ist zur Erzielung einer entsprechenden Festigkeit oder Steifigkeit eine höhere Materialdichte, gleichbedeutend einem dichteren Gefüge der Flocken 3, wie dies schematisch durch die Schraffur angedeutet, vorgesehen.

Zur Erzielung einer derartigen unterschiedlichen Materialdichte im Formteil 4 ist nun, wie insbesondere der Fig. 6 zu entnehmen, beispielsweise während des Füllvorganges in der Füllzeit "T" das Druckniveau "P" oder das Fördervolumen "V" stufenweise, entsprechend in der Regel- und/oder Steuereinrichtung 41 vorgegebener Steuerungsparameter, geregelt. Dies kann durch Regelung des Druckerzeugers 33 z.B. dessen Drehzahl oder durch Regelung der Regelklappe 63 erreicht werden um damit einen auf die Bereiche abgestimmten Befüllungsgrad des Formhohlraumes 60 mit dem Materialgemisch 2 zu erreichen.

Um in den Bereichen der Randstege 108 eine höhere Materialdichte zu erzielen wird während des Füllvorganges dieser Bereiche ein höherer Förderdruck angelegt und/oder ein größeres Luftvolumen eingestellt. Um in einem Mittelteil 110 mit der Vertiefung 109 eine geringere Materialdichte, und damit höhere Elastizität zu erreichen wird stufenweise während des Füllvorganges dieses Bereiches der Förderdruck bzw. das Luftvolumen zurückgeregelt.

Durch diese Regelbarkeit des Förderdruckes "P" bzw. des Fördervolumens "V" des Luftstromes können unterschiedliche Anforderungen an Bereiche eines Formteils 4 in Abhängigkeit einer Formteilabmessung 111 berücksichtigt werden, wie dies nur beispielhaft, und nicht auf den gezeigten Formteil 4 beschränkt, dargestellt wurde.

Damit ist es möglich Formteilzonen 112 am Formteil 4 mit unterschiedlichen Eigenschaften der Elastizität und/oder Festigkeit auszubilden die ein unterschiedlich dichtes Materialgefüge aufweisen und über fließende Übergangszonen 113 eine Einheit des Formteils 4 ausbilden. Selbstverständlich ist über die möglichen Regelungs- und/oder Steuerungsvorgänge auch ein einheitliches Materialgefüge und damit Dicht für den Formteil 4 erzielbar wie es auch vielfach gefordert wird.

Erwähnt sei noch, dass die erfindungsgemäße Fertigungseinrichtung 1 sowie das beanspruchte Verfahren auch für die Verarbeitung weiterer Materialgemische, z.B. Gummigranulat, Korkgranulat etc. sowie beliebiger Mischungen daraus, zu Formteilen 4 vorgesehen ist, wie auch der beschriebene Formteil 4 nicht auf ein Materialgemisch aus Kunststoffflocken beschränkt ist.

Die Ausführungsbeispiele zeigen mögliche Ausführungsvarianten der Fertigungsvorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmaglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Fertigungsvorrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2, 3; 4; 5, 6 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Fertigungsvorrichtung
- 2: Materialgemisch
- 3: Flocken
- 4: Formteil
5
- 6: Aufstandsfläche
- 7: Silobehälter
- 8: Deckenkonstruktion
- 9: Bauwerk
- 10: Wiegevorrichtung

- 11: Abgabeklappe
- 12: Abgabeöffnung
- 13: Stellmittel
- 14: Mischvorrichtung
- 15: Mischbehälter

- 16: Antriebsmotor
- 17: Mischerrotor
- 18: Rotorwelle
- 19: Wendel
- 20: Zuführvorrichtung

- 21 22 23: Dosiervorrichtung
- 24: Nachmischvorrichtung
- 25: Mischkammer

- 26: Gehäuse
- 27: Wendelwelle
- 28: Antriebsmotor
- 29: Elektromotor
- 30: Drehachse

- 31: Füllarmatur
- 32: Versorgungsleitung
- 33: Druckerzeuger
- 34: Druckspeicher
- 35: Formfüllvorrichtung

- 36: Formteilform
- 37: Rundtisch-Förderanlage
- 38: Führungsanordnung
- 39: Transportschlitten
- 40: Antrieb

- 41: Regel- und/oder Steuereinrichtung
- 42: Gehäuse
- 43: Mantelteil
- 44: Wandscheibe
- 45: Flügelzellenrad

- 46: Laufring
- 47: Nabe
- 48: Achsstummel
- 49: Antriebswelle
- 50: Lageranordnung

- 51: Drehachse
- 52: Drehantrieb
- 53: Flügel
- 54: Förderkammer
- 55: Pfeil

- 56: Zulauföffnung
- 57: Durchtrittsöffnung
- 58: Anschlussflansch
- 59: Pfeil
- 60: Formhohlraum

- 61: Wälzkolbengebläse
- 62: Antriebsmotor
- 63: Regelklappe
- 64: Stellmittel
- 65: Profilrohr

- 66: Länge
- 67: Scharnier
- 68: Deckel
- 69: Ausschnitt
- 70: Rastmittel

- 71: Endbereich
- 72: Fühlerelement
- 73: Füllstandssensor
- 74: Leitung
- 75: Anschlussmuffe

- 76: Rohrstutzen
- 77: Austrittsöffnung
- 78: Filterelement
- 79: Schicht
- 80: Führungsstange

- 81: Führungsanordnung
- 82: Pneumatikzylinder
- 83: Verstellweg
- 84: Drehteil
- 85: Formoberteil

- 86: Formunterteil
- 87: Positionsmutter
- 88: Positionsstift
- 89: Kupplungsmittel
- 90: Spannklaue

- 91: Pneumatikzylinder
- 92: Gegenaufnahme
- 93: Verteilkanal
- 94: Versorgungsbohrung
- 95: Verdichtungsantrieb

- 96: Pneumatikzylinder
- 97: Aufnahme
- 98: Trenn- und/oder Einsenkvorrichtung
- 99: Trennmesser
- 100: Einsenkstempel

- 101: Führungsanordnung
- 102: Linearantrieb
- 103: Pneumatikzylinder
- 104: Trennebene
- 105: Anschlagelement

- 106: Vertiefung
- 107: Pfeil
- 108: Randsteg
- 109: Vertiefung
- 110: Mittelteil

- 111: Formteilabmessung
- 112: Formteilzone
- 113: Übergangszone

## Patentansprüche

1. Fertigungsvorrichtung (1) für Formteile (4) aus einem flockenförmigen Materialgemisch (2), insbesondere Flocken (3) aus Recyclingkunststoff bzw. -Schaumstoff, mit zumindest einer, eine Zumischvorrichtung für einen Kleber aufweisenden Mischvorrichtung (14) und gegebenenfalls einer Nachmischvorrichtung (24) und mit einer der Mischvorrichtung (14) oder Nachmischvorrichtung (24) nachgeordneten, mit einem Strömungsmedium, insbesondere einem Luftstrom eines Drucklufterzeugers (33) und/oder aus einem Druckspeicher (34), beaufschlagbaren Formenfüllvorrichtung (35) und mit zumindest einer mit dieser kuppelbaren Formteilform (36), **dadurch gekennzeichnet, dass** die Formenfüllvorrichtung (35) durch eine über eine Versorgungsleitung (32) mit dem Drucklufterzeuger (33) und/oder Druckspeicher (34) verbundene, rohrförmige Füllarmatur (31) gebildet ist und zwischen der Versorgungsleitung (32) und der Füllarmatur (31) oder in der Versorgungsleitung (32) bzw. der Füllarmatur (31) eine volumetrische Dosiervorrichtung (23) für das Materialgemisch (2) angeordnet ist.

2. Fertigungsvorrichtung nach Anspruch 1, **dadurch gekennzeichnet, dass** die Dosiervorrichtung (23) durch einen zylinderförmigen, durch Wandscheiben (44) begrenzten Mantelteil (43) und einem in diesem rotierbar angeordneten Flügelzellenrad (45) gebildet ist, das an den Wandscheiben (44) drehbar gelagert und mit einer Antriebswelle (49) eines Drehantriebes (52) drehfest verbunden ist.

3. Fertigungsvorrichtung nach Anspruch 2, **dadurch gekennzeichnet, dass** der Drehantrieb (52) durch einen drehzahlregelbaren Elektromotor, bevorzugt einen Getriebemotor, gebildet ist, der gegebenenfalls mit einer Regel- und/oder Steuereinrichtung (41) leitungsverbunden ist.

4. Fertigungsvorrichtung nach Anspruch 2 oder 3, **dadurch gekennzeichnet, dass** das Flügelzellenrad (45) mit auf einer Nabe (47) radial verlaufend angeordneten Flügeln (53) einen Innenraum des Gehäuses (42) in eine Anzahl volumensgleicher Förderkammern (54) unterteilt.

5. Fertigungsvorrichtung nach einem der Ansprüche 2 bis 4, **dadurch gekennzeichnet, dass** die Flügeln (53) dichtend gegenüber einer inneren Oberfläche des Mantelteils (43) und den diesen begrenzenden gegenüberliegenden Wandscheiben (44) ausgebildet sind.

6. Fertigungsvorrichtung nach einem der Ansprüche 2 bis 5, **dadurch gekennzeichnet, dass** im Mantelteil (43) eine Zulauföffnung (56) für das Materialgemisch (2) angeordnet ist.

7. Fertigungsvorrichtung nach einem der Ansprüche 2 bis 6, **dadurch gekennzeichnet, dass** in den Wandscheiben (44), einander gegenüberliegend, je eine mit Anschlussmitteln für die Versorgungsleitung (32) und die Füllarmatur (31) versehene Durchtrittsöffnung (57) angeordnet ist.

8. Fertigungseinrichtung nach einem der vorhergehenden Ansprüche, **dadurch gekennzeichnet, dass** die Füllarmatur (31) mit der Dosiervorrichtung (23) und gegebenenfalls mit der Nachmischvorrichtung (24) auf einem in zu einer Aufstandsfläche (6) parallelen Ebene verfahrbaren Transportschlitten (39) angeordnet ist.

9. Fertigungsvorrichtung nach einem der vorhergehenden Ansprüche, **dadurch gekennzeichnet, dass** der Drucklufterzeuger (33) durch ein insbesondere drehzahlregelbares Wälzkolbengebläse (61) gebildet ist.

10. Fertigungsvorrichtung nach einem der vorhergehenden Ansprüche, **dadurch gekennzeichnet, dass** in der Versorgungsleitung (32) eine Regelklappe (63) zur Volumsregelung für den Luftstrom angeordnet ist, die bevorzugt mit der Regel- und/oder Steuereinrichtung (41) leitungsverbunden ist.

11. Fertigungsvorrichtung nach einem der vorhergehenden Ansprüche, **dadurch gekennzeichnet, dass** die Misch- und/oder Nachmischvorrichtung (14,24) durch einen Mischbehälter (15) mit zumindest einer diesen querenden, mit einem Antriebsmotor (16) antriebsverbundenen Mischerrotor (17) mit in Richtung eines Behälterzentrums gegenläufigen Wendeln (19) gebildet ist.

12. Fertigungsvorrichtung nach Anspruch 11, **dadurch gekennzeichnet, dass** der Antriebsmotor (16) drehzahlregelbar ausgebildet ist und bevorzugt mit der Regel- und/oder Steuervorrichtung (41) leitungsverbunden ist.

13. Fertigungsvorrichtung nach Anspruch 11 oder 12, **dadurch gekennzeichnet, dass** der Mischerrotor (17) mit paarweise angeordneten, einen unterschiedlichen Außendurchmesser aufweisenden, Wendeln (19) bestückt ist.

14. Fertigungsvorrichtung nach einem der Ansprüche 11 bis 13, **dadurch gekennzeichnet, dass** eine Mittelachse des Mischerrotors (17) in einer zumindest etwa parallel zur Aufstandsfläche (6) verlaufenden Ebene verläuft.

15. Fertigungsvorrichtung nach einem der vorhergehenden Ansprüche, **dadurch gekennzeichnet, dass** die Füllarmatur (31) durch ein Profilrohr (65) gebildet ist, das über eine Flanschausbildung mit der Dosiervorrichtung (23) lösbar verbunden ist.

16. Fertigungsvorrichtung nach Anspruch 15, **dadurch gekennzeichnet, dass** das Profilrohr (65) insbesondere einen quadratischen Querschnitt aufweist.

17. Fertigungsvorrichtung nach Anspruch 15 oder 16, **dadurch gekennzeichnet, dass** das Profilrohr (65) bereichsweise mit einem eine Reinigungsöffnung überdeckenden Deckel (68) versehen ist.

18. Fertigungsvorrichtung nach Anspruch 17, **dadurch gekennzeichnet, dass** der Deckel (68) in Scharnieren (67) schwenkbar am Profilrohr (65) gelagert ist und zumindest ein Rastmittel (70) zur lösbaren Fixierung des Deckels (68) vorgesehen ist.

19. Fertigungsvorrichtung nach einem der vorhergehenden Ansprüche, **dadurch gekennzeichnet, dass** in einem der Formteilform (36) zugewandten Endbereich (71) der Füllarmatur (31), z.B. am Profilrohr (65), ein mit einem Fühlerelement (72) in einen inneren Querschnitt der Füllarmatur (31) einragenden, Füllstandssensor (73) angeordnet ist.

20. Fertigungsvorrichtung nach Anspruch 19, **dadurch gekennzeichnet, dass** das Fühlerelement (72) durch eine Lichtleitfaserelement gebildet ist.

21. Fertigungsvorrichtung nach einem der Ansprüche 19 oder 20, **dadurch gekennzeichnet, dass** der Füllstandssensor (73) mit der Regel- und/oder Steuereinrichtung (41) leitungsverbunden ist.

22. Fertigungsvorrichtung nach einem der vorhergehenden Ansprüche, **dadurch gekennzeichnet, dass** in dem Endbereich (71) der Füllarmatur, z.B. des Profilrohres (65), zumindest eine Luftdüse zur Einbringung eines Spülluftstromes in den Innenquerschnitt der Füllarmatur (31) angeordnet ist.

23. Fertigungsvorrichtung nach einem der vorhergehenden Ansprüche, **dadurch gekennzeichnet, dass** an der Füllarmatur (31) z.B. am Profilrohr (65), ein mit dem Innenquerschnitt strömungsverbundener Rohrstutzen (76), zur Abfuhr einer Restmenge des Materialgemisches (2) aus der Füllarmatur (31), angeordnet ist, der über eine Rückführleitung mit dem Mischbehälter (15) strömungsverbunden ist.

24. Fertigungsvorrichtung nach einem der vorhergehenden Ansprüche, **dadurch gekennzeichnet, dass** eine innere Oberfläche der Füllarmatur (31) mit einer Schicht (79), insbesondere aus Kunststoff, Keramik etc. versehen ist.

25. Fertigungsvorrichtung nach einem der vorhergehenden Ansprüche, **dadurch gekennzeichnet, dass** die Formteilform (36) auf einer zeit- und/oder ablaufgetakteten Transportvorrichtung, z.B. einer Rundtisch-Förderanlage (37) oder einer endlosen Platten- oder Kettenfördervorrichtung, angeordnet ist.

26. Fertigungsvorrichtung nach Anspruch 25, **dadurch gekennzeichnet, dass** die Transportvorrichtung, z.B. Rundtisch-Förderanlage (37), zur Anspeisung der Formteilform (36) mit Dampf und/oder Druckluft und/oder elektrischer Energie und/oder Daten über Übertragungselemente z.B. Drehübertrager, Schleifübertrager, mit zumindest einer Versorgungsleitung verbunden ist.

27. Fertigungsvorrichtung nach einem der Ansprüche 3 bis 26, **dadurch gekennzeichnet, dass** zur Datenübertragung drahtlose Signalsende- und/oder Signalempfangsmittel in der Regel- und/oder Steuereinrichtung (41) und auf der Transportvorrichtung z.B. der Rundtisch-Förderanlage (37), und/oder der Formteilform (36) angeordnet sind.

28. Fertigungsvorrichtung nach einem der vorhergehenden Ansprüche, **dadurch gekennzeichnet, dass** zur Befüllung der Formteilform (36) eine Tandemanordnung der aus der Mischvorrichtung (14), Dosiervorrichtung (26) und Füllarmatur (31) gebildeten Formenfüllvorrichtung (35) vorgesehen ist.

29. Fertigungsvorrichtung nach einem der vorhergehenden Ansprüche, **dadurch gekennzeichnet, dass** in Wandteilen der Formteilform (36) Führungsbahnen ausbildende Durchbrüche angeordnet sind, in denen bedarfsweise zumindest ein in einen Formhohlraum (65) verstellbarer Schieber gelagert ist.

30. Fertigungseinrichtung nach Anspruch 29, **dadurch gekennzeichnet, dass** in den Führungsbahnen Stempel und/oder Trennmesser (99) verstellbar gelagert sind.

31. Fertigungsvorrichtung nach Anspruch 29, **dadurch gekennzeichnet, dass** ein Linearantrieb (102) des Schiebers, z.B. ein mit Druckmedium beaufschlagbarer Pneumatikzylinder (103), ein elektromotorischer Spindeltrieb an bzw. im Bereich der Formteilform (36) angeordnet ist.

32. Fertigungsvorrichtung nach einem der Ansprüche 29 bis 31, **dadurch gekennzeichnet, dass** ein Anschlagelement (105) für das Trennmesser (99) in einem diesen gegenüberliegenden Wandteil der Formteilform (36) als ein elastisch verformbares Einlageelement ausgebildet ist.

33. Fertigungseinrichtung nach einem der Ansprüche 31 oder 32, **dadurch gekennzeichnet, dass** das Trennmesser (99) oder der Schieber mit dem Linearantrieb (102) und einer Führungsanordnung (101) eine modulartige Trenn- und/oder Einsenkvorrichtungen (98) ausbilden.

34. Fertigungsvorrichtung nach Anspruch 33, **dadurch gekennzeichnet, dass** in einem Formoberteil (85) und/oder Formunterteil (86) der Formteilform (36) Aufnahmen (97) für die Trenn- und/oder Einsenkvorrichtung (98) angeordnet sind.

35. Fertigungsvorrichtung nach Anspruch 33 oder 34, **dadurch gekennzeichnet, dass** die Trenn- und/oder Einsenkvorrichtung (98) über Kupplungsmittel (89) am Formoberteil (85) und/oder Formunterteil (86) lösbar befestigt ist.

36. Fertigungsvorrichtung nach einem der Ansprüche 25 bis 35, **dadurch gekennzeichnet, dass** die Formteilform (36) auf der Transportvorrichtung z.B. der Rundtisch-Förderanlage (37), insbesondere einem Drehtisch (84), über Positioniermittel (87) lagepositioniert ist.

37. Fertigungsvorrichtung nach einem der Ansprüche 25 bis 36, **dadurch gekennzeichnet, dass** die Formteilform (36) auf der Transportvorrichtung, z.B. der Rundtisch-Förderanlage (37), insbesondere dem Drehtisch (84), über Kupplungsmittel (89), insbesondere mittels, über einen Pneumatikzylinder (91) verstellbare Spannklauen (90), gehaltert ist.

38. Fertigungsvorrichtung nach Anspruch 36 oder 37, **dadurch gekennzeichnet, dass** im Drehtisch (84) für die Anspeisung der Formteilform (36) mit dem Reaktionsmedium wie Heißluft, Dampf, etc., Verteilkanäle (93) angeordnet sind.

39. Fertigungsvorrichtung nach Anspruch 38, **dadurch gekennzeichnet, dass** die Verteilkanäle (93) wechselweise für die Zufuhr des Reaktionsmediums und Abfuhr des Luftstromes für die Befüllung des Formhohlraumes (60) mit dem Materialgemisch (2) ausgebildet sind.

40. Verfahren zur Herstellung eines Formteils (4) aus einem Materialgemisch (2) aus zerkleinerten, in Flockenform aufbereiteten Teilen, insbesondere aus einem Kunststoffschaum, wobei die Flocken (3) in zumindest einer Mischvorrichtung (14) gemischt und mit einem, aus einer Dosiervorrichtung (23) während des Mischvorganges zugeführtem Bindemittel versetzt und die Flocken (3) anschließend mittels eines Fluidstromes, insbesondere Luftstromes aus einem mit einer Formenfüllvorrichtung (35) leitungsverbundenen Druckerzeuger (33) und/oder Druckspeicher (34) in einen Formhohlraum (60) einer Formteilform (36) gefördert werden und in dieser das Materialgemisch (2) verdichtet und anschließend durch Beaufschlagung mit einem in die Formteilform (36) eingebrachten Reaktionsmedium, z. B. Heißluft, Dampf, zu dem Formteil (4) geformt wird, **dadurch gekennzeichnet, dass** ein Druckniveau des zur Förderung des Materialgemisches (2) aus der Formenfüllvorrichtung (35) in die Formteilform (36) der Formenfüllvorrichtung (35) aus dem Druckerzeuger (33) zugeführten Luftstromes während des Füllvorganges zeit- und/oder volumenabhängig geregelt wird.

41. Verfahren nach Anspruch 40, **dadurch gekennzeichnet, dass** das Druckniveau und/oder das Fördervolumen während des Füllvorganges der Formteilform (36) konstant gehalten wird.

42. Verfahren nach Anspruch 40, **dadurch gekennzeichnet, dass** das Druckniveau und/oder das Fördervolumen während des Füllvorganges der Formteilform (36) variiert wird.

43. Verfahren nach Anspruch 40, **dadurch gekennzeichnet, dass** das Druckniveau und/oder das Fördervolumen in Abhängigkeit der Füllzeit geregelt wird.

44. Verfahren nach Anspruch 40, **dadurch gekennzeichnet, dass** das Druckniveau und/oder das Fördervolumen in Abhängigkeit der Fördermenge des zur Befüllung der Formteilform (36) vorgesehenen Materialgemisches (3) geregelt wird.

45. Verfahren nach Anspruch 40, **dadurch gekennzeichnet, dass** das Druckniveau und/oder das Fördervolumen in Abhängigkeit von Formteilzonen (112) mit unterschiedlich auszubildenden Materialgefüge geregelt wird.

46. Verfahren nach Anspruch 40, **dadurch gekennzeichnet, dass** das Druckniveau des Druckerzeugers (33) entsprechend einem an der Formteilform (36) anstehenden Staudruck geregelt wird.

47. Verfahren nach Anspruch 40, **dadurch gekennzeichnet, dass** das Druckniveau des zugeführten Luftstromes mittels einer von der Regel- und/oder Steuereinrichtung (41) angesteuerten Regelklappe (63) geregelt wird.

48. Verfahren nach Anspruch 40, **dadurch gekennzeichnet, dass** das Fördervolumen des der Formteilform (36) zugeführten Materialgemisches (2) durch Drehzahlregelung des Drehantriebes (52) des Flügelzellenrades (45) erfolgt.

49. Verfahren nach einem der Ansprüche 40 bis 48, **dadurch gekennzeichnet, dass** der Befüllungsgrad der Formteilform (36) mittels des Füllstandssensor (73) überwacht und unmittelbar nach Befüllung der Formteilform (36) die Füllarmatur (31) mit einem Spülluftstrom beaufschlagt wird.

50. Verfahren nach einem der Ansprüche 40 bis 49, **dadurch gekennzeichnet, dass** nach Ablauf einer vorgegebenen Reaktionszeit zur Stabilisierung des Formteils (4) mittels an der Formteilform (36) angeordneter Trenn- und/oder Einsenkvorrichtungen (98), Trennmesser (99) und/oder Einsenkstempel (100) in den Formhohlraum (60) einragend verstellt werden.

51. Formteil aus einem flockenförmigen Materialgemisch (2), insbesondere Kunststoffschaum, **dadurch gekennzeichnet, dass** der Formteil (4) aus miteinander über Übergangszonen (113) verbundener Formteilzonen (112) mit einem eine unterschiedliche Dichte ausbildenden Materialgefüge der Flocken (3) gebildet ist und die Formteilzonen (112) eine unterschiedliche Elastizität und/oder Festigkeit aufweisen.

52. Formteil nach Anspruch 51, **dadurch gekennzeichnet, dass** in den Formteil (4) z.B. Vertiefungen (104), Durchbrüche, Perforationen angeordnet sind.

53. Formteil nach Anspruch 51 oder 52, **dadurch gekennzeichnet, dass** der Formteil (4) mit einer zumindest bereichsweise aufgebrachten Oberflächenschicht aus zum Material des Formteils (4) unterschiedlichem Material versehen ist.

54. Formteilform mit zumindest einem Formoberteil (85) und einem Formunterteil (86) die relativ zueinander verstellbar sind und einen Formhohlraum (60) umgrenzen und mit zumindest einem Einströmkanal zur Befüllung mit einem Materialgemisch (3) mit Flocken (3) aus Recycling- Kunststoff, insbesondere Schaumstoff oder einem Granulat, z.B. Gummi, Kork, **dadurch gekennzeichnet, dass** am Formoberteil (85) und/oder Formunterteil (86) zumindest eine Aufnahme (97) vorgesehen ist, in der eine Trenn- und/oder Einsenkvorrichtung (98) mit zumindest einem in den Formhohlraum (60) verstellbaren Einsenkstempel (100) angeordnet ist.

55. Formteilform nach Anspruch 54, **dadurch gekennzeichnet, dass** die Trenn- und/oder Einsenkvorrichtung (98) modulartig ausgebildet ist und eine Führungsanordnung (101) und einen Linearantrieb (102) für den Einsenkstempel (100) aufweist.

56. Formteilform nach Anspruch 54 oder 55, **dadurch gekennzeichnet, dass** der Einsenkstempel (100) als Trennmesser (99) ausgebildet ist.

57. Formteilform nach einem der Ansprüche 54 bis 56, **dadurch gekennzeichnet, dass** in einem dem Einsenkstempel (100) oder dem Trennmesser (99), in einem in Verstellrichtung gegenüber liegenden Wandteil des Formoberteils (85) oder Formunterteils (86) in einer Vertiefung (106) ein bevorzugt elastisch verformbares Anschlagelement (105) angeordnet ist.
